# EUROPEAN PATENT APPLICATION

(11) **EP 2 490 509 A2**
(43) Date of publication of application: **22.08.2012**
(21) Application number: 12155683.1
(22) Date of filing: 16.02.2012
(51) Int. Cl.: H05B 37/02, H05B 33/08

(54) **Apparatus and method for controlling lighting based on DALI communication**

(30) Priority: 18.02.2011 KR 20110014651
(71) Applicant: Samsung LED Co., Ltd., Gyeonggi-do, 443-743 (KR)
(72) Inventor: Kim, Ki-young, Gyeonggi-do (KR); Lee, Sang-hun, Gyeonggi-do (KR); Lee, Nam-yeol, Gyeonggi-do (KR); Lee, Sang-gon, Seoul (KR); Jung, Te-o, Gyeonggi-do (KR); Lee, Chang-sub, Seoul (KR)
(74) Representative: Grünecker, Kinkeldey, Stockmair & Schwanhäusser

(57) **Abstract**

A lighting controlling apparatus including: a management server generating control information based on information received from a user; a digital addressable lighting interface (DALI) master that is connected to the management server via wired or wireless communication and generates a control message based on the control information; and a DALI ballast that is connected to the DALI master via DALI communication and drives a lighting apparatus by using the control message. Accordingly, a plurality of DALI masters may be locally or remotely controlled via the management server. Also, not only the DALI ballast may be controlled by using the DALI master via DALI communication but also, it may be selectively controlled in regard to the relationship between a DALI switch. In addition, the DALI ballast may be directly controlled by using a sensor and a remote controller.

## Description

### BACKGROUND

### 1. Field

The present disclosure relates to apparatuses and methods for controlling lighting based on digital addressable lighting interface (DALI) communication.

### 2. Description of the Related Art

Along with an increase in life quality, more and more people are interested in lighting. Now more is required from modern lighting devices than just the function of providing light by turning on a switch. That is, modern lighting devices are developed to have the capability of creating various lighting moods according to the purpose of an indoor space, or automatically adjusting intensity of illumination in accordance with the intensity of illumination of surroundings.

The lighting devices developed in this manner are usually based on digital addressable lighting interface (DALI) communication. A DALI communication standard allocates an address to each lighting device or to each of groups of lighting devices to establish scenes of various combinations, thereby realizing lighting devices that is able to meet the user's requirements.

DALI communication is performed by using a bus consisting of two strands and at a low voltage, and a maximum of 64 DALI interfaces may be connected to each DALI bus. In the DALI communication, statuses of components connected to a DALI system are monitored and controlled via the DALI interfaces. Examples of the statuses of components that may be monitored and controlled via the DALI communication are a fault status, fire due to a sensor, or security related problems.

Serial data stream format messages are used in the DALI system, and the messages consist of an address part and a command part. A DALI apparatus uses digital data expressing "0" and "1" using two different voltage levels, and performs communication in a broadcast format by using each of the addresses. In general, a DALI communication may establish 64 addresses and 16 group addresses.

### SUMMARY

Provided are apparatuses and methods for controlling lighting in which at least one digital addressable lighting interface (DALI) master may be managed by using a management server locally or remotely.

Provided are apparatuses and methods for controlling lighting in which at least one DALI ballast may be controlled by using a DALI master via DALI communication.

Provided are apparatuses and methods for controlling lighting in which a DALI ballast may be directly or selectively controlled by using a DALI switch while controlling the DALI ballast using a DALI master.

Provided are apparatuses and methods for controlling lighting in which a DALI ballast is directly or selectively controlled by using a sensor unit or a remote controller.

Additional aspects will be set forth in part in the description which follows and, in part, will be apparent from the description, or may be learned by practice of the presented embodiments.

According to an aspect of the present invention, a lighting controlling apparatus includes: a management server generating control information based on information received from a user; a digital addressable lighting interface (DALI) master that is connected to the management server via wired or wireless communication and generates a control message based on the control information; and a DALI ballast that is connected to the DALI master via DALI communication and drives a lighting apparatus by using the control message. The DALI ballast may include: a lighting driving unit driving the lighting apparatus; a power supply unit supplying power for driving the lighting apparatus; and a DALI unit control unit generating a control signal and transmitting the control signal to the lighting driving unit and the power supply unit to control the lighting driving unit and the power supply unit.

The lighting controlling apparatus may further include a DALI switch generating a switch message and transmitting the generated switch message to the DALI ballast to control the DALI ballast. The generated switch message may be transmitted to the DALI ballast via DALI communication. Also, the switch message and the control message may be selectively applied to the DALI ballast by using the DALI master.

The lighting controlling apparatus may further include a sensor unit generating a sensing signal by sensing at least one of intensity of illumination around the DALI ballast, whether the user is present in a room, and a position of the user. At least one of the DALI master, the DALI switch, and the DALI unit control unit may include a receiving unit receiving the generated sensing signal.

The lighting controlling apparatus may further include a remote controller generating a remote control signal to control the DALI ballast. At least one of the DALI master, the DALI switch, and the DALI unit control unit may include a receiving unit receiving the remote control signal.

The wired or wireless communication may be near distance or far distance communication in the form of one of RS-232, RS-485, USB, Ethernet and radio frequency (RF). The control message may include a ballast address allocated to the DALI ballast controlled by the DALI master, and the control information may include a master address allocated to the DALI master controlled by the management server.

According to an aspect of the present invention, a method of controlling lighting, includes: generating control information based on information received from a user and transmitting the generated control information to a DALI master via wired or wireless communication; generating a control message based on the control information and transmitting the control message to a DALI ballast via digital addressable lighting interface (DALI) communication; and driving a lighting apparatus based on the control message. The method may further include generating a switch message and transmitting the generated switch message to the DALI ballast. The method may further include selectively applying the switch message and the control message to the DALI ballast.

The method may further include generating a sensing signal by sensing at least one of intensity of illumination around the DALI ballast, whether the user is present in a room, and a position of the user, and controlling the DALI ballast by using the generated sensing signal.

The method may further include generating a remote control signal by using a remote controller and controlling the DALI ballast by using the generated remote control signal.

The wired or wireless communication may be near distance or far distance communication in the form one of RS-232, RS-485, USB, Ethernet and radio frequency (RF). The control message may include a ballast address allocated to the DALI ballast that is controlled by the DALI master, and the control information may include a master address allocated to the DALI master that is controlled by a management server.

### BRIEF DESCRIPTION OF THE DRAWINGS

These and/or other aspects will become apparent and more readily appreciated from the following description of the embodiments, taken in conjunction with the accompanying drawings of which:

FIG. 1 is a block diagram illustrating a lighting controlling apparatus according to an embodiment of the present invention;

FIG. 2 is a block diagram illustrating a digital addressable lighting interface (DALI) ballast according to an embodiment of the present invention;

FIG. 3 is a block diagram illustrating a DALI master according to an embodiment of the present invention;

FIG. 4 is a block diagram illustrating a management server according to an embodiment of the present invention;

FIG. 5 is a block diagram illustrating a lighting controlling apparatus according to an embodiment of the present invention;

FIG. 6 illustrates a combination of a DALI switch and a DALI ballast according to an embodiment of the present invention;

FIG. 7 is a block diagram illustrating a lighting controlling apparatus according to an embodiment of the present invention; and

FIGS. 8 through 10 illustrate operations of a method of controlling lighting according to embodiments of the present invention.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Various example embodiments will now be described more fully with reference to the accompanying drawings in which exemplary embodiments are shown.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein the term "and/or" includes any and all combinations of one or more of the associated listed items.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

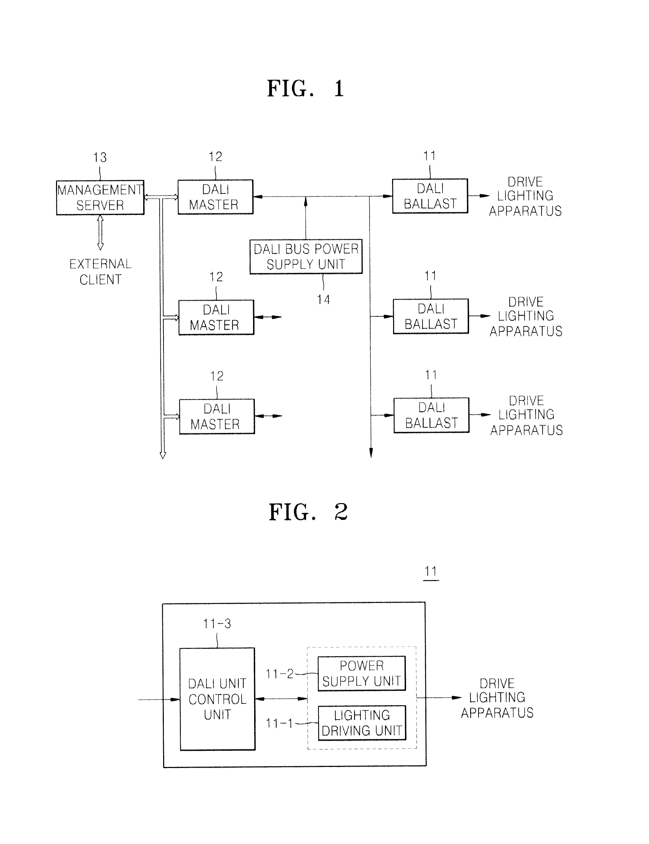

FIG. 1 is a block diagram illustrating a lighting controlling apparatus according to an embodiment of the present invention. As illustrated in FIG. 1, the lighting controlling apparatus includes a digital addressable lighting interface (DALI) ballast 11, a DALI master 12, and a management server 13.

The management server 13 is connected to at least one DALI master 12 via wired or wireless communication, and each DALI master 12 is connected to at least one DALI ballast 11 via DALI communication. The management server 13 may control at least one DALI master 12 via wired or wireless communication in a central control manner, and each DALI master 12 may integrally control or manage the at least one DALI ballast 11 via a DALI bus.

The lighting controlling apparatus according to the current embodiment of the present invention may include a DALI bus power supply unit 14. The DALI bus power supply unit 14 supplies power for DALI communication between the DALI master 12 and the DALI ballast 11.

The DALI ballast 11 refers to a control device that drives a lighting apparatus based on a control message transmitted by the DALI master 12 via DALI communication. FIG. 2 is a block diagram illustrating the DALI ballast 11 according to an embodiment of the present invention. As illustrated in FIG. 2, the DALI ballast 11 may include a lighting driving unit 11-1, a power supply unit 11-2, and a DALI unit control unit 11-3.

The lighting driving unit 11-1 drives the lighting apparatus according to a control signal of the DALI unit control unit 11-3. The lighting apparatus may be, for example, a white light-emitting diode (LED) or red, green, or blue LEDs expressing three primary colors of light. Also, the lighting apparatus may include a lamp such as a halogen lamp or a xenon lamp that is operated in a different manner from an LED. The lighting driving unit 11-1 may perform diving operations such as turning on/off the lighting apparatus, dimming control or color control of the lighting apparatus. For example, if the lighting apparatus is an LED, for the dimming control, sequential information about a direct current (DC) driving voltage between 0 to 10 V, and to control the color, information about on a direct current driving voltage with respect to each of red, green, and blue LEDs, may be included.

The power supply unit 11-2 supplies power for driving the lighting driving unit 11-1 according to a control signal of the DALI unit control unit 11-3. The power supply unit 11-2 may be a voltage converter that uses an alternating current (AC) power without changing it, or may also be a switching mode power supply (SMPS) that supplies power by converting an AC power to a DC power using a switching method. In particular, an LED may be driven at a relatively low direct current driving voltage compared to lamps that are driven in other different methods, and thus is highly likely to be damaged due to instable DC driving voltage. Accordingly, when a lighting apparatus including an LED is used, the power supply unit 11-2 may include a SMPS which is capable of supplying a DC driving voltage without being affected by a fluctuation in an external voltage.

The DALI unit control unit 11-3 receives a control message that is transmitted by the DALI master 12, and generates a control signal to control the power supply unit 11-2 or the lighting driving unit 11-1 according to the control message. For example, the control signal may include information on adjustment of a DC driving voltage generated by the power supply unit 11-2 for controlling intensity of illumination or controlling dimming. Also, in order to turn on/off the lighting apparatus, information on turning on/off a driving signal of the lighting driving unit 11-1 may be included. Also, the DALI unit control unit 11-3 may transmit to the DALI master 12 current status information on the intensity of illumination of the lighting apparatus or a fault state via DALI communication.

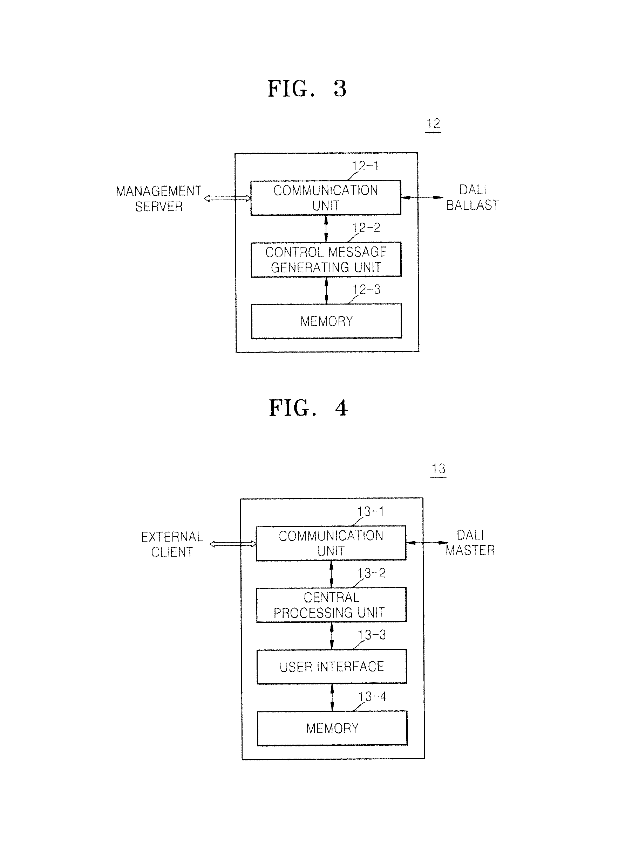

The DALI master 12 refers to a control device that generates a control message for controlling the DALI ballast 11 based on control information transmitted from the management server 13 and transmits the same to the DALI ballast 11. FIG. 3 is a block diagram illustrating the DALI master 12 according to an embodiment of the present invention. The DALI master 12 may include a communication unit 12-1 for performing communication with the management server 13 and the DALI ballast 11 and a control message generating unit 12-2 generating a control message based on control information and status information. Also, the DALI master 12 may include a memory 12-3 for storing status information and control information.

The communication unit 12-1 is connected to the DALI ballast 11 and the management server 13 and performs two-way communication. In detail, the communication unit 12-1 and the DALI ballast 11 are connected to each other via DALI communication. The communication unit 12-1 transmits a control message for controlling an operation of the DALI ballast 11 to the DALI ballast 11 via DALI communication. The communication unit 12-1 receives status information of components connected to the communication unit 12-1 via DALI communication. Also, through communication between the communication unit 12-1 and the management server 13, the communication unit 12-1 receives control information for controlling the DALI ballast 11 via wired or wireless communication, and transmits status information received from the DALI ballast 11. The communication unit 12-1 transmits the status information received from the DALI ballast 11 and the control information received from the management server 13 to the control message generating unit 12-2 to generate a control message.

The control message generating unit 12-2 generates a control message for controlling the lighting apparatus based on status information and control information received from the communication unit 12-1, and transmits the generated control message to the communication unit 12-1. The control message generating unit 12-2 may transmit the status information, the control information, and the generated control message to the memory 12-3 to save them therein.

A plurality of DALI ballasts 11 may be connected to a single DALI master 12. In this case, a ballast address is allocated to each of the plurality of DALI ballasts 11. The DALI master 12 may control each of the plurality of DALI ballasts 11 by transmitting a control message including a ballast address via DALI communication.

The plurality of DALI ballasts 11 may be divided into a plurality of ballast groups each including at least one DALI ballast 11 and controlled according to each of the groups. For example, if there are a plurality of control spaces where a plurality of lighting apparatuses and a plurality of DALI ballasts 11 for driving the lighting apparatuses are installed, the plurality of DALI ballasts 11 installed in each of the plurality of control spaces is classified as one group, and controlled according to the group so as to create a scene according to the use of each of the control spaces. In this case, the DALI master 12 may transmit a control message including group information and a ballast address via DALI communication and control the plurality of DALI ballasts 11 according to the groups. In general, a maximum of 64 DALI ballasts 11 may be controlled by a single DALI master 12, and may be controlled in 16 different groups.

The management server 13 generates control information based on information received from a user. The management server 13 is connected to the DALI master 12 and receives status information therefrom via wired or wireless communication, and controls the DALI ballast 11 by transmitting the control information. FIG. 4 is a block diagram illustrating the management server 13 according to an embodiment of the present invention. As illustrated in FIG. 4, the management server 13 may include a communication unit 13-1 performing wired or wireless communication with the DALI master 12, a user interface unit 13-3 receiving an input from the user for controlling the lighting controlling apparatus, a central processing unit 13-2 generating control information for controlling the DALI ballast 11 by using the input received from the user, and a memory 13-4 storing a set up value and status information received from the user.

The management server 13 may be connected to a plurality of DALI masters 12. In this case, the plurality of DALI masters 12 may each be allocated with a master address. By using a master address and a ballast address, the management server 13 may individually control the plurality of DALI masters and a plurality of ballasts.

Control information of the lighting apparatus may be generated by using the management server 13. To generate control information, a user interface such as a keyboard input device may be installed in the management server 13. A set up value to generate control information may be input to the management server 13 via the user interface. Also, the set up value may be input to the management server 13 via an external client connected to the management server 13 via a wired or wireless network. The external client may be, for example, a mobile wireless communication terminal such as a mobile phone or a smart phone. The set up value is transmitted to the DALI master 12 via wired or wireless communication in the form of control information together with a master address and a ballast address. The wired or wireless communication between the management server 13 and the DALI master 12 may be near distance or far distance communication in the form of, for example, RS-232, RS-485, USB, Ethernet or radio frequency (RF).

The control information transmitted from the management server 13 to the DALI master 12 may include schedule data that allows the DALI master 12 to control the DALI ballast 11 according to a predetermined time. The DALI master 12 manages schedule data transmitted from the management server 13, and transmits to the DALI ballast 11 a control message that operates the DALI ballast 11 according to the schedule data. For example, the DALI master 12 may control the DALI ballast 11 according to the schedule data transmitted from the management server 13, to increase the illumination intensity of a bedroom according to the wake-up time or block the power supply after a predetermined period elapses after sunset or after the user has left the room. The DALI master 12 requires a real time clock (RTC) for such schedule data management.

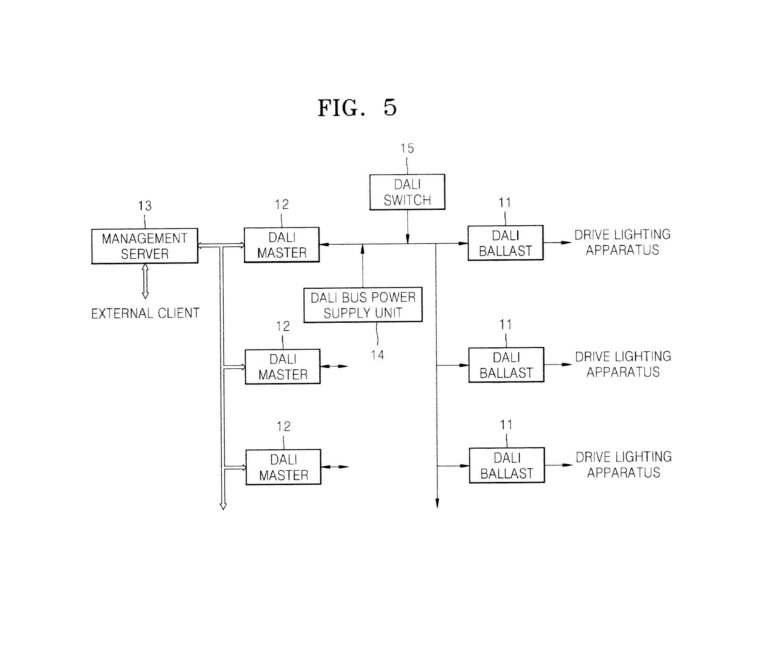

FIG. 5 is a block diagram illustrating a lighting controlling apparatus according to an embodiment of the present invention. As illustrated in FIG. 5, the lighting controlling apparatus includes a DALI switch 15. A DALI ballast 11 may be directly controlled by the DALI switch 15. The DALI switch 15 may be connected to the DALI ballast 11 via DALI communication. The DALI switch 15 generates a switch message to control the DALI ballast 11, and transmits the generated switch message to the DALI ballast 11 using a ballast address allocated to the DALI ballast 11 to control the DALI ballast 11.

Meanwhile, if a control message from the DALI master 12 and a switch message from the DALI switch 15 are transmitted to the DALI ballast 11 at the same time, a collision problem between the control message and the switch message of by which message the DALI ballast 11 is to be driven may occur.

In order to solve this collision problem, the switch message and the control message may be selectively applied to the DALI ballast 11 by using the DALI master 11. Examples of this will be described below.

For example, the DALI master 12 or the DALI switch 15 may include a mechanism that senses a message collision when transmitting a message, and if a collision is thus sensed, transmission of the control message or the switch message is stopped. Thereafter, after a predetermined period of standby time passes, the DALI master 12 or the DALI switch 15 tries retransmission of the corresponding message. If a collision is not sensed when trying retransmission of the message, the DALI ballast 11 is controlled according to the retransmitted message. The predetermined period of standby time may be set according to a priority defined with respect to the DALI master 12 or the DALI switch 15 in advance. Also, if a plurality of DALI switches 15 are included, a priority may be independently set for each of the DALI switches 15. In this case, the higher the priority, the shorter the standby time, and the lower the priority, the longer the standby time. Accordingly, the higher the priority, the more often transmission of a control message or a switch message is tried, and the more likely that the DALI ballast 11 is controlled at a much earlier time after the problem of collision has been solved.

According to another example, before transmitting a control message or a switch message to the DALI ballast 11, the DALI master 12 or the DALI switch 15 transmits a priority regarding transmitting a message to each other. Then, if a collision problem occurs between a control message and a switch message, the DALI master 12 or the DALI switch 15 compares the message transmission priorities with each other. As a result of comparing the message transmission priorities, one of the messages having a higher message transmission priority is transmitted to the DALI ballast 11, and transmitting of the other message is stopped. After a predetermined period of standby time elapses, the other message may be tried to retransmit. The message transmission priority may be stored in a memory stored in each of the DALI master 12 and the DALI switch 15. Also, if a plurality of DALI switches are included, a message transmission priority is set for each of the DALI switches, and the message transmission priority may be stored in a memory of each of the DALI switches.

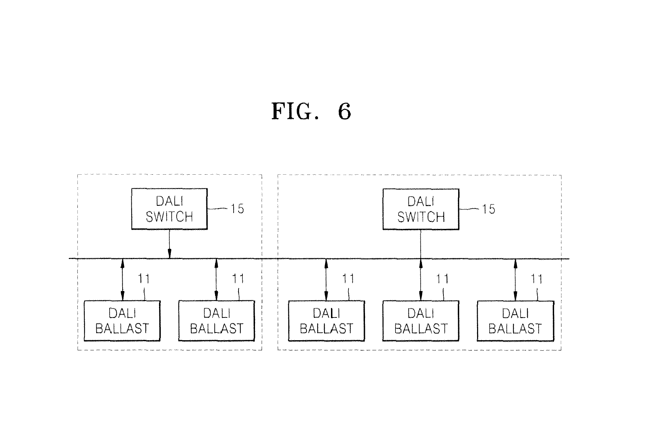

FIG. 6 illustrates a combination of the DALI switch 15 and the DALI ballast 11 according to an embodiment of the present invention. As illustrated in FIG. 6, the DALI switch 15 may control at least one DALI ballast 11, and the number of DALI ballasts 11 controlled by each of the DALI switches 15 may vary. The DALI switch 15 may be directly connected to the at least one DALI ballast 11 to directly control the same. Also, the DALI switch 15 may control a plurality of DALI ballasts 11 by using a ballast address allocated to each of the plurality of DALI ballasts 11. If the DALI switch 15 controls the DALI ballast 11 according to a ballast address, the ballast address to be controlled may be stored in a memory included in the DALI switch 15. In this case, the ballast address that is stored in the memory of the DALI switch 15 and allows control of the DALI ballast 11 may be set up and managed by using the management server 13. Also, the user may modify the ballast address stored in the DALI switch 15 via a user interface included in the management server 13 as desired and store the same in the DALI switches 15.

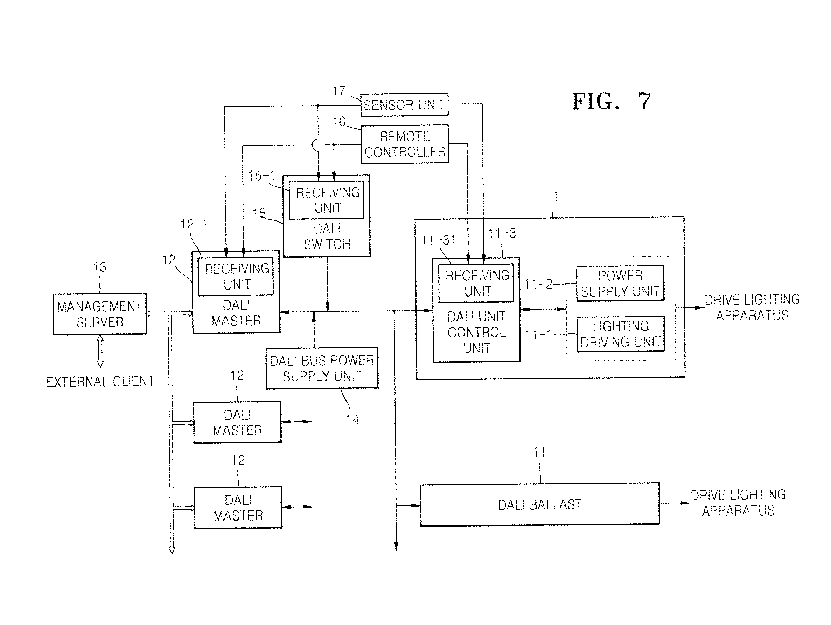

FIG. 7 is a block diagram illustrating a lighting controlling apparatus according to an embodiment of the present invention.

As illustrated in FIG. 7, the lighting controlling apparatus may further include a remote controller 16. The remote controller 16 controls driving of the DALI ballast 11 via wireless communication such as infrared communication, Bluetooth, or wireless Internet or wired communication. That is, the remote controller 16 may control the DALI ballast 11 without the management server 13. Accordingly, in a lighting system that is integrally managed by the management server 13, the user may independently control lighting set up as the user demands or likes in a place where the user is located by using the remote controller 16. e

A remote control signal from the remote controller 16 may be transmitted to at least one of the DALI unit control unit 11-3, the DALI master 12, and the DALI switch 15. According to the current embodiment of the present invention, in order to receive the remote control signal, at least one of the DALI unit control unit 11-3, the DALI master 12, and the DALI switch 15 may include a receiving unit.

As illustrated in FIG. 7, if a remote control signal is transmitted to the DALI unit control unit 11-3 of the DALI ballast 11, the DALI unit control unit 11-3 may generate a control signal not according to a control message from the DALI master 12 but a control signal according to the remote control signal and control the lighting driving unit 11-1 and the power supply unit 11-2 by using the control signal.

As illustrated in FIG. 7, according to an embodiment of the present invention, if a remote control signal is transmitted to the DALI master 12, the DALI master 12 generates a control message by using the transmitted remote control signal, and transmits the generated control message to the DALI ballast 11 to control driving of the DALI ballast 11. In this case, the remote control signal transmitted to the DALI master 12 may include a ballast address allocated to the DALI ballast 11 to be controlled and an operation information of controlling the DALI ballast 11. That is, a remote control signal including a ballast address and the operation information is transmitted to the DALI master 12, and the DALI master 12 generates a control message by using the remote control signal and transmits the control message to control the DALI ballast 11.

According to another example, the DALI master 12 determines a priority between control information transmitted from the management server 13 and a remote control signal, and generates a control message according to the determined priority and transmits the control message to control the corresponding DALI ballast 11. In this case, the DALI master 12 may determine a priority between the control information and the remote control signal by referring to a set up value that is determined in advance and stored in a memory included in the DALI master 12.

As illustrated in FIG. 7, if a remote control signal is transmitted to the DALI switch 15, an operation is performed the same way as when controlling the DALI ballast 11 by driving the DALI switch 15. In this case, the remote control signal transmitted to the DALI master 12 may include a ballast address allocated to the DALI ballast 11 to be controlled and operation information of controlling corresponding DALI ballast 11. The DALI switch 15 that has received the remote control signal controls the corresponding DALI ballast 11 by generating a switch message based on the ballast address and the operation information of controlling included in the remote control signal and transmitting the switch message to the DALI ballast 11. Also, instead of the remote control signal including the ballast address of the DALI ballast 11 to be driven, the DALI ballast 11 that is allocated to the DALI switch 15 in advance may also be controlled.

As the remote control signal is transmitted to the DALI switch 15, if the switch message generated by using the remote control signal or the control message according to the DALI master 12 are transmitted to the DALI ballast 11 at the same time, the collision problem of by which message the DALI ballast 11 is to be driven may occur.

According to an embodiment of the present invention, to solve the problem of collision, the DALI master 12 or the DALI switch 15 may include a mechanism that senses a message collision when transmitting a message, and if a collision is thus sensed, transmission of a control message or a switch message is stopped. Then, after a predetermined period of standby time elapses, the DALI master 12 or the DALI switch 15 tries retransmission of the corresponding message. If a collision is not sensed when trying retransmission of the message, the DALI ballast 11 is controlled according to the retransmitted message. The predetermined period of standby time may be set according to a priority defined with respect to the DALI master 12 or the DALI switch 15 in advance. In this case, the higher the priority, the shorter the standby time, and the lower the priority, the longer the standby time. Accordingly, the higher the priority, the more often transmission of a control message or a switch message is tried, and the more likely that the DALI ballast 11 is controller at a much earlier time after the collision problem has been solved.

According to another example, before transmitting a control message or a switch message to the DALI ballast 11, the DALI master 12 or the DALI switch 15 transmits a priority regarding transmitting a message to each other. Then, if a collision problem occurs between the control message and the switch message, the DALI master 12 or the DALI switch 15 compares the message transmission priorities with each other. As a result of comparing the message transmission priorities, one of the messages having a higher message transmission priority is transmitted to the DALI ballast 11, and transmitting of the other message is stopped. After a predetermined period of standby time elapses, the other message may be tried to transmit. The message transmission priority may be stored in a memory included in each of the DALI master 12 and the DALI switch 15.

As illustrated in FIG. 7, the lighting controlling apparatus may further include a sensor unit 17. The sensor unit 17 senses a motion of the user or whether the user is present in a room to generate a sensing signal. The lighting controlling apparatus according to the current embodiment of the present invention may be more actively driven by controlling the DALI ballast 11 by using the generated sensing signal. The sensor unit 17 may include at least one of an operation sensing sensor sensing a user operation around the DALI ballast 11, a heat-detecting sensor sensing heat such as body heat of the user or heat generated due to a fire, and an illumination intensity sensing sensor sensing an illumination intensity. A sensing signal generated by using the sensor unit 17 may be transmitted to at least one of the DALI master 12, and the DALI switch 15, and the DALI unit control unit 11-3 in order to control the DALI ballast 11. According to the current embodiment of the present invention, in order to receive a sensing signal generated by using the sensor unit 17, at least one of the DALI master 12, and the DALI switch 15, and the DALI unit control unit 11-3 may include a receiving unit.

As illustrated in FIG. 7, if the sensing signal is transmitted to the DALI master 12, the DALI master 12 writes a control message by using the received sensing signal, and transmits the same to the DALI ballast 11 to thereby control the DALI ballast 11. For example, when the user enters a room where lighting is turned off, the sensor unit 17 senses it and generates a sensing signal, and transmits the generated sensing signal to the DALI master 12. The DALI master 12 which has received the sensing signal generates a control message for turning on the lighting and transmits the generated control message to the DALI ballast 11 to control the DALI ballast 11 so as to turn on the lighting. Alternatively, in a place where a uniform intensity of illumination is to be maintained, the sensor unit 17 senses a shadow area that is created as a part of the lighting is covered by the user to generate a sensing signal and transmits the sensing signal to the DALI master 12. Upon receiving the sensing signal, the DALI master 12 may control the DALI ballast 11 by generating a control message that directs maintenance of the intensity of illumination by directly illuminating the shadow area by using another lighting and transmitting the control message to the DALI ballast 11, thereby maintaining a uniform intensity of illumination of the place.

As illustrated in FIG. 7, when the sensing signal is transmitted to the DALI switch 15, the DALI switch 15 may control the DALI ballast 11 by generating a switch message by using the received sensing signal and transmitting the generated switch message to the DALI ballast 11 via DALI communication.

As illustrated in FIG. 7, when the sensing signal is transmitted to the DALI unit control unit 11-3, the DALI unit control unit 11-3 may generate a control signal by using the received sensing signal, and control the power supply unit 11-2 and the lighting driving unit 11-1 by using the generated control signal.

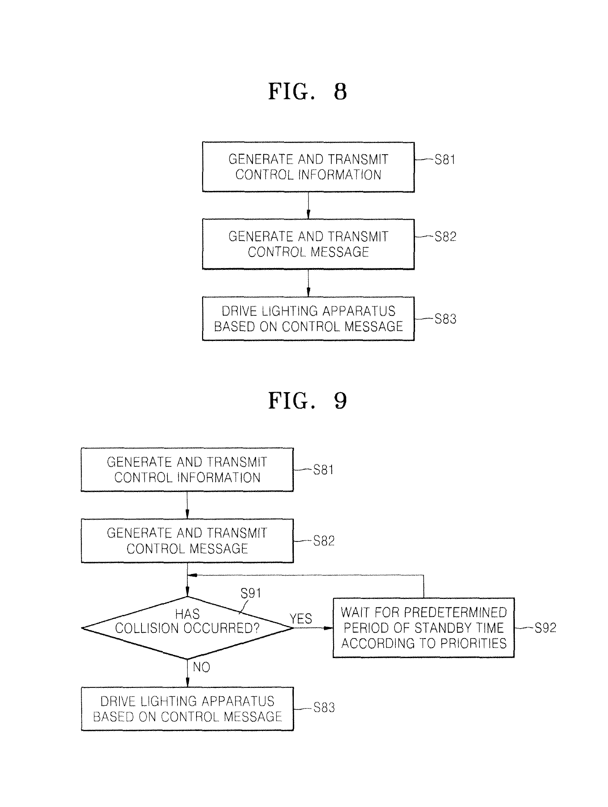

FIGS. 8 through 10 illustrate operations of a method of controlling lighting according to embodiments of the present invention. Hereinafter, the method of controlling lighting according to the embodiments of the present invention will be described in detail.

As illustrated in FIG. 8, in operation S81, control information is generated based on information received from a user, and the generated control information is transmitted to a DALI master via wired or wireless communication. The control information is generated by using a management server. The control information may be generated based on information input via a user interface included in the management server such as a keyboard input device. Also, since the control information may be accessed using an external client that is connected to the management server via a wired or wireless network, the control information may also be generated based on information that is remotely input from the external client. The external client may be a mobile wireless communication terminal such as a mobile phone or a smart phone.

Control information may be generated using status information such as the current intensity of illumination around a DALI ballast or a fault state. That is, if a fault occurs in some lighting apparatuses, the management server generates control information that blocks a power supply of the lighting apparatuses with the fault by using the status information including the information thereabout and transmits the control information to the DALI master so as to cut off the power supply of the corresponding DALI ballast. The status information is transmitted from the DALI ballast to the management server via the DALI master. The control information may also include, in addition to the status information, information about turning on/off the lighting apparatus, dimming control, and color control.

A plurality of DALI masters may be connected to the management server, and a plurality of DALI ballasts may be connected to a single DALI master. The control information may include master addresses, ballast addresses, etc. Accordingly, the management server may control only a DALI master that is to be driven, by using a master address included in the control information, and the DALI master driven accordingly may control only a corresponding DALI ballast by using a ballast address.

The generated control information is transmitted to the DALI master via wired or wireless information so that the DALI master is controlled by the management server. The wired or wireless communication may be near distance or far distance communication in the form of, for example, RS-232, RS-485, USB, Ethernet or radio frequency (RF).

In operation S82, a control message is generated based on the control information, and the control message is transmitted to the DALI ballast via DALI communication. The control message is generated by the DALI master based on the control information received from the management server. The generated control message is used to control the DALI ballast.

The control message may include information about driving operations such as ballast addresses, turning on/off the lighting apparatus, dimming control, and color control. Also, the control message may include the status information received from the DALI ballast.

The plurality of DALI ballasts may be divided into a plurality of ballast groups each including at least one DALI ballast and controlled according to each group. Thus, the DALI master may control the plurality of DALI ballasts according to each group by transmitting a control message including group information and a ballast address via DALI communication. Generally, a maximum of 64 DALI ballasts 11 may be controlled by a single DALI master, and the DALI ballasts 11 may be divided into a maximum of 16 groups.

In operation S83, a lighting apparatus is driven based on the control message. In order to drive the lighting apparatus, the DALI ballast 11 may generate a control signal based on the control message. The control signal is generated by using a DALI unit control unit included in the DALI ballast 11.

The control signal may include information about driving operations such as turning on/off the lighting apparatus, dimming control, and color control. For example, if the lighting apparatus is an LED, for dimming control, sequential information about a DC driving voltage between 0 to 10 V may be included in the control signal. Alternatively, in order to control the color, information about a DC driving voltage about each of red, green, and blue LEDs may be included in the control signal.

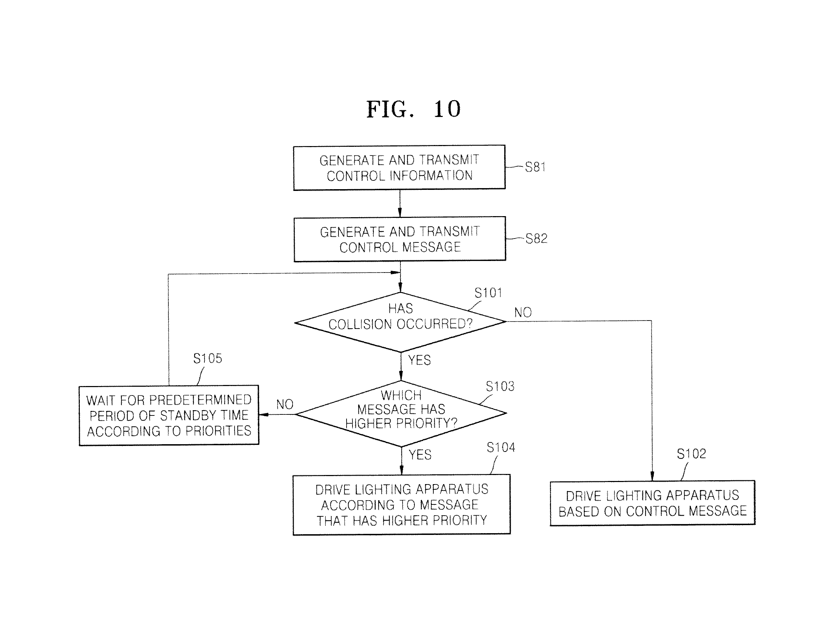

The method of controlling lighting according to the embodiment of the present invention may further include controlling the DALI ballast by generating a switch message and transmitting the generated switch message to the DALI ballast. The switch message is transmitted to the DALI ballast via DALI communication to drive the lighting apparatus. Meanwhile, if a control message from a DALI master and a switch message from the DALI switch are transmitted to the DALI ballast at the same time, the collision problem of by which message the DALI ballast 11 is to be driven may occur. FIGS. 9 and 10 illustrate each operation of a method of solving the collision problem between a control message and a switch message.

Referring to FIG. 9, a management server generates control information, and transmits the generated control information to the DALI master in operation S81. The DALI master generates a control message based on the received control information and if a collision is not sensed through a collision sensing mechanism, the DALI master transmits the generated control message to the DALI ballast in operation S82. If transmission is completed normally, the DALI ballast drives the lighting apparatus according to the control message in operation S83.

The DALI master or the DALI switch may include a mechanism that senses a message collision when transmitting a message, and if a collision is sensed through this mechanism, transmission of a control message or a switch message is stopped. Thereafter, after a predetermined period of standby time elapses, the DALI master or the DALI switch tries retransmission of the control message or the switch message whose transmission was stopped in operation S92. If a collision is not sensed when trying retransmission of the message, the DALI ballast is controlled according to the retransmitted message. The predetermined period of standby time may be set according to a priority defined with respect to the DALI master or the DALI switch in advance. Also, if a plurality of DALI switches are included, a priority may be independently set for each of the DALI switches. In this case, the higher the priority, the shorter the standby time, and the lower the priority, the longer the standby time. Accordingly, the higher the priority, transmission of a control message or a switch message is tried more often, and the more likely that the DALI ballast is controlled at a much earlier time after the collision has been solved.

Referring to FIG. 10, the management server generates control information, and transmits the generated control information to the DALI master in operation S81. The DALI master or the DALI switch transmits a priority regarding message transmission to each other. The DALI master generates a control message based on the received control information, and when transmitting the generated control message to the DALI ballast in operation S82, the DALI master determines whether a collision occurs between the control message and the switch message in operation S101. If it is determined that a collision has occurred, the control message is transmitted to the DALI ballast normally, and the lighting apparatus is driven according to the control message in operation S102.

Then, if a collision has occurred, the DALI master or the DALI switch compares the message transmission priorities with each other in operation S103. After comparing the message transmission priorities, one of the messages having a higher message transmission priority is transmitted to the DALI ballast 11 in operation S104. Transmitting of the other message is stopped, and the other message may be tried to retransmit after a predetermined period of standby time elapses, in operation S105. The message transmission priority may be stored in a memory included in each of the DALI master and the DALI switch. Also, if a plurality of DALI switches are included, a message transmission priority may be set for each of the DALI switches, and the message transmission priority may be stored in a memory of each of the DALI switches.

According to an embodiment of the present invention, the method may further include generating a sensing signal by sensing at least one of intensity of illumination around the DALI ballast, whether the user is present in a room, and a position of the user, and controlling the DALI ballast by using the generated sensing signal. The generated sensing signal may be transmitted to at least one of the DALI master, the DALI switch, and the DALI unit control unit. According to the current embodiment of the present invention, in order to receive a sensing signal, at least one of the DALI master, the DALI switch, and the DALI unit control unit may include a receiving unit.

If a sensing signal is transmitted to the DALI master, the DALI master may control the DALI ballast by writing a control message by using the received sensing signal and transmitting the control message to the DALI ballast.

If a sensing signal is transmitted to the DALI switch, the DALI switch may control the DALI ballast by generating a switch message by using the received sensing signal and transmitting the generated switch message to the DALI ballast via DALI communication.

If a sensing signal is transmitted to the DALI unit control unit, the DALI unit control unit may generate a control signal by using the received sensing signal, and control a power supply unit and a lighting driving unit by using the generated control signal.

According to an embodiment of the present invention, the method may further include generating a remote control signal by using a remote controller and controlling the DALI ballast by using the generated remote control signal. Thus, the DALI ballast may be controlled not via the management server but by using the remote controller.

The remote control signal may be transmitted to at least one of the DALI unit control unit, the DALI master, and the DALI switch. In order to receive the remote control signal, least one of the DALI master, the DALI switch, and the DALI unit control unit may include a receiving unit.

If a remote control signal is transmitted to the DALI unit control unit, according to an embodiment of the present invention, the DALI unit control unit may generate a control signal according to the remote control signal and not a control message according to the DALI master to control the lighting driving unit and the power supply unit.

If the remote control signal is transmitted to the DALI master, according to an embodiment of the present invention, the DALI master may generate a control message by using the transmitted remote control signal, and transmit the generated control message to the DALI ballast to control driving of the DALI ballast. In this case, the remote control signal transmitted to the DALI master may include a ballast address allocated to a DALI ballast to be controlled and operation information of controlling a corresponding DALI ballast.

If a remote control signal is transmitted to the DALI switch, according to an embodiment of the present invention, an operation information is performed in the same manner as when controlling a DALI ballast by driving the DALI switch. In this case, the remote control signal transmitted to the DALI switch may include a ballast address allocated to a DALI ballast to be controlled and operation information of controlling a corresponding DALI ballast. The DALI switch which has received the remote control signal controls a corresponding DALI ballast by generating a switch message based on the ballast address included in the remote control signal and operation information of controlling, and transmitting the switch message to the DALI ballast. Also, instead of the remote control signal including the ballast address of the DALI ballast to be driven, the DALI ballast that is allocated to the DALI switch in advance may also be controlled.

The method of generating a switch message by transmitting the remote control signal to the DALI switch and controlling the DALI ballast by using the generated switch message in terms of the relationship between the control message has been described above.

As described above, according to the one or more of the above embodiments of the present invention, at least one DALI master may be controlled via a management server that may locally or remotely control the DALI master integrally via wired or wireless communication, and at least one DALI ballast may be controlled and managed via DALI communication by using the at least one DALI master. Also, according to the embodiments of the present invention, the DALI ballast may be directly controlled by using a DALI switch even while controlling the DALI ballast by using the management server and the DALI master. In addition, according to the one or more of the above embodiments of the present invention, while controlling a DALI ballast by using the management server and the DALI master, the surroundings such as intensity of illumination around the DALI ballast and whether the user is present in a room may be sensed by using a sensor unit to directly control the DALI ballast accordingly. Moreover, according to the embodiments of the present invention, while controlling the DALI ballast by using the management server and the DALI master, the DALI ballast may be directly controlled by using a remote controller.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A lighting controlling apparatus comprising:
a management server generating control information based on information received from a user;
a digital addressable lighting interface (DALI) master that is connected to the management server via wired or wireless communication and generates a control message based on the control information; and
a DALI ballast that is connected to the DALI master via DALI communication and drives a lighting apparatus by using the control message.

2. The lighting controlling apparatus of claim 1, wherein the DALI ballast comprises:
a lighting driving unit driving the lighting apparatus;
a power supply unit supplying power for driving the lighting apparatus; and
a DALI unit control unit generating a control signal and transmitting the control signal to the lighting driving unit and the power supply unit to control the lighting driving unit and the power supply unit.

3. The lighting controlling apparatus of claim 2, further comprising a DALI switch generating a switch message and transmitting the generated switch message to the DALI ballast to control the DALI ballast.

4. The lighting controlling apparatus of claim 3, wherein the generated switch message is transmitted to the DALI ballast via DALI communication.

5. The lighting controlling apparatus of claim 4, wherein the switch message and the control message are selectively applied to the DALI ballast by using the DALI master.

6. The lighting controlling apparatus of claim 3, further comprising a sensor unit generating a sensing signal by sensing at least one of intensity of illumination around the DALI ballast, whether the user is present in a room, and a position of the user.

7. The lighting controlling apparatus of claim 6, wherein at least one of the DALI master, the DALI switch, and the DALI unit control unit comprises a receiving unit receiving the generated sensing signal.

8. The lighting controlling apparatus of claim 3, further comprising a remote controller generating a remote control signal to control the DALI ballast.

9. The lighting controlling apparatus of claim 1, wherein the control message comprises a ballast address allocated to the DALI ballast controlled by the DALI master, and the control information comprises a master address allocated to the DALI master controlled by the management server.

10. A method of controlling lighting, the method comprising:
generating control information based on information received from a user and transmitting the generated control information to a DALI master via wired or wireless communication;
generating a control message based on the control information and transmitting the control message to a DALI ballast via digital addressable lighting interface (DALI) communication; and
driving a lighting apparatus based on the control message.

11. The method of claim 9, further comprising generating a switch message and transmitting the generated switch message to the DALI ballast.

12. The method of claim 11, comprising selectively applying the switch message and the control message to the DALI ballast.

13. The method of claim 11, further comprising generating a sensing signal by sensing at least one of intensity of illumination around the DALI ballast, whether the user is present in a room, and a position of the user, and controlling the DALI ballast by using the generated sensing signal.

14. The method of claim 11, further comprising generating a remote control signal by using a remote controller and controlling the DALI ballast by using the generated remote control signal.

15. The method of claim 10, wherein the control message comprises a ballast address allocated to the DALI ballast that is controlled by the DALI master, and the control information comprises a master address allocated to the DALI master that is controlled by a management server.
